# NOUVEAU FASCICULE DE BREVET EUROPEEN

(11) **EP 0 114 773 B2**
(45) Date de publication et mention de la décision concernant l'opposition: **14.04.1993**
(45) Mention de la délivrance du brevet: 29.11.1989
(21) Numéro de dépôt: 84400110.7
(22) Date de dépôt: 19.01.1984
(51) Int. Cl.: G07F 7/10

(54) **Procédé et dispositif pour habiliter le détenteur d'un objet portatif tel qu'une carte à accéder par cette carte à au moins un service dispensé par au moins un organisme habilitant**
Verfahren und Vorrichtung um dem Inhaber eines tragbaren Objektes, insbesondere einer Karte, mit dieser Karte den Zugriff zu einer Dienstleistung von wenigstens einer berechtigenden Stelle zu ermöglichen
Method and device for authorizing the holder of a portable object, such as a card, access by means of this card, to at least one service delivered by at least one authorizing organisation

(30) Priorité: 20.01.1983 FR 8300884
(43) Date de publication de la demande: 01.08.1984
(73) Titulaire: BULL S.A., 92800 Puteaux (FR)
(72) Inventeur: Ugon, Michel, F-75960 Paris Cedex 20 (FR)

(56) Documents cités:
- EP-A- 0 057 603
- EP-A- 0 058 029
- FR-A- 2 469 760
- FR-A- 2 503 423
- US-A- 3 806 874
- US-A- 4 001 550
- S. R. Bourne "The Unix System", 1982, Addison-Wesley Publishing Company, London, pages 6 et 7

## Description

L'invention concerne généralement les problè- mes poses par l'accès au moyen d'un objet portatif à des services protégés, et a plus particulièrement pour objet un procédé et un dispositif pour habiliter le détenteur d'un objet portatif tel qu'une carte a accéder par cette carte a au moins un service dispense par au moins un organisme habilitant.

Lessor de la télématique a mis en evidence un problème nouveau: comment se faire reconnaître, a distance ou non, par un correspondant qui ne nous connaît pas personnellement ou par un système informatique auquel on veut s'adresser a partir d'un terminal par exemple.

Cet essor s'est notamment concrétisé par I'apparition de supports électroniques portatifs et amovi- bles, tels que des cartes incluant une mémoire non volatile protégée, qui ont permis d'entrevoir de nom- breuses applications, notamment axées vers le grand public.

En effet, grace a la personnalisation de ces cartes par des informations préenregistrées dans leurs mémoires, il a été possible de concevoir et de mettre au point des systèmes qui permettent d'habiliter des personnes ou des organismes a effectuer des operations protégées propres aux applications envisagées.

Toutes ces applications donnent naissance a un echange d'informations sous la forme d'un dialogue entre au moins une carte et un terminal. Dès I'instant ou il y a un echange d'informations, notamment confidentielles, il est impératif de mettre en place des contrôles charges essentiellement de verifier la validité des informations échangées. Cela est d'autant plus impératif qu'il faut obligatoirement associer la notion de fraude a la notion d'accès protégé ou de service protégé.

ll existe déjà des systèmes dans lesquels une carte permet d'acceder a des milieux protégés. Pour améliorer la resistance a la fraude de ces systèmes, il est institué un dialogue qui prend en compte des mots de passe aléatoires de façon a empêcher un fraudeurde reproduire une sequence de dialogue an- térieur ayant autorisé un accès licite au milieu protégé. Un tel système est notamment décrit dans le brevet français n° 2 469 760 de la demanderesse.

D'autres systèmes permettentd'utiliserune carte pour des applications financières. Au depart, la carte doit être créditée d'une certaine somme d'argent par un organisme emetteur dûment habilité. Pour éviter une tentative de fraude consistant notamment a modifier la somme créditée dans la carte, I'organisme émetteur se protège par I'utilisation d'un mot de passe pour garder le contrôle des operations. Une amé- lioration a été apportée a ces systèmes pouraugmen- ter la resistance a la fraude en utilisant un mot de passe spécifique dont la valeur est corrélée a une donnée propre de la carte par l'intermédiaire d'un algorithme connu du seul organisme émetteur.

Après plusieurs utilisations, le credit de la carte vient a epuisement et son détenteur doit y faire inscrire un nouveau credit. Al'heure actuelle, pour recréditer une carte, il n'existe que deux possibilités: soit la carte est purement et simplement inutilisable et il faut se faire redélivrer une nouvelle carte, soit on se fait recréditer la carte par l'organisme émetteur seul habilité a effectuer une telle operation. Dans ces deux cas, il faut donc que le détenteur de la carte se dépla- ce auprès de I'organisme émetteur.

Jusqu'à maintenant, le détenteur d'une carte ne peut donc pas se faire recréditer sa carte a distance, notamment depuis son domicile. En effet, une telle operation nécessiterait la transmission d'informations confidentielles sur la ligne de communication reliant un terminal situé au domicile du déteneur de la carte et un système situé a I'organisme émetteur. Ces informations confidentielles sont essentiellement constituées par une clé client pour permettre a I'appareil de transaction de I'organisme de certifier le légitimité du détenteur de la carte et surtout par une clé propre a I'organisme transmise a la carte pour faire certifier par la carte qu'elle est bien en communication avec le terminal de I'organisme habilité. Dés l'instant où il y a communication d'informations confidentielles, il y a possibilité de fraude.

Le brevet US 3 806 874 pallie en partie cette possibilité de fraude et décrit une carte branchée a un terminal de façon a constituer un système qui autorise le détenteur de I'objet portatif a modifier le contenu d'une mémoire qui memorise des informations constituées uniquement par un credit. La carte envoie au terminal un nombre personnel d'identification qui permet a I'objet portatif et au terminal d'executer un calcul prenant en compte une premiere clé secrete préenregistrée dans le terminal et dans la carte et un nombre aléatoire fourni par le terminal a la carte. Le résultat du calcul effectué par le terminal est envoyé vers la carte pour être comparée dans un premier comparateur avec le résultat du calcul effectué par la carte. Le premier comparateur permet en cas de coïn- cidence des résultats de valider d'une part la transmission au terminal soit d'une deuxième clé secrete soit du résultat d'un deuxième calcul effectué par la carte, et d'autre part d'autoriser l'entrée d'informations a destination de la mémoire de la carte et la sortie d'informations provenant de la mémoire de la carte et a destination du terminal. Le résultat du deuxième calcul ou la deuxième clé secrete est compare avec respectivement, soit le résultat d'un deuxième calcul effectué par les circuits du terminal, soit une deuxième clé secrete fournie par le terminal, dans un comparateur du terminal pour autoriser la transmission d'informations contenues dans une mémoire du terminal en vue de leur inscription dans la mémoire de la carte. Un tel système, laisse encore certaines possibilités de fraude. En effet, vis-à-vis d'un terminal hostile détenu par un fraudeur la simple communication de la deuxième clé secrete permettrait malgré tout, en modifiant les circuits du terminal, d'inscrire I'information dans la mémoire de la carte et la mémoire de la carte ne détectera par la fraude, d'autant plus qu'elle ne conserve pas une information sur la validité de I'information écrite.

L'invention vise donc a pallier cet inconvenient en permettant au détenteur d'une carte de recréditer sa carte depuis son domicile, en permettant a la carte de gérer elle-même les divers résultats de calcul exécu- tés et de valider elle-même les informations d'habili- tation inscrites par le système dans la carte. A cet effet, I'invention propose un procédé pour habiliter le détenteur d'un objet portatif tel qu'une carte du type comprenant une mémoire et des circuits de traitements, de comparaisons et de commande, a accéder par cet objet aux services dispenses par divers organismes habilitants, le procédé comprenant les caracteristiques de la revendication 1.

L'invention vise aussi a proposer un système permettant de mettre en oeuvre le procédé.

Un tel système comporte les caracteristiques de la revendication 8.

D'autres avantages, caractéristiques et details apparaîtront a I'aide de la description explicative qui va suivre en reference aux figures qui illustrent un mode préférentiel de realisation de l'invention.
Les figures 1a et 1b illustrent schematiquement les liaisons qui peuvent exister entre différents habilitants auxquels peut accéder le détenteur d'une carte.
La figure 2 est un schema synoptique représen- tant les moyens nécessaires a i'execution du procédé conforme a l'invention.
La figure 3 explicite la nature des informations d'habilitation ecrites dans la mémoire de la carte et qui identifient les habilitants correspondants.

Avant de décrire le procédé conforme a l'invention, il est nécessaire de définir au préalable ce qu'il faut entendre par organisme habilitant. Un habilitant est un organisme, généralement reconnu officielle- ment, qui dispense au moins un service auquel toute personne morale ou physique peut accéder par I'in- termédiaire d'une carte délivrée par cet organisme.

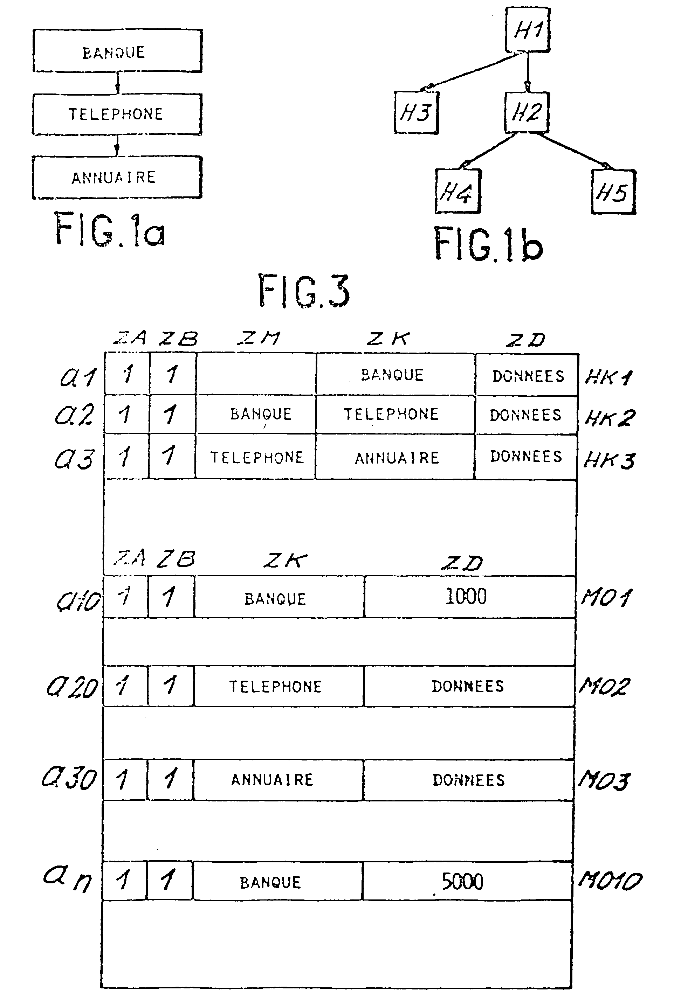

En se reportant a la figure 1a, il est schématisé un habilitant BANQUE tel qu'un établissement bancaire habilité a délivrer des cartes de credit. Une personne ayant en sa possession une telle carte de cré- dit peut s'adresser a un autre habilitant (H1 de la figure 1 b) pour obtenir les services qu'il dispense et si possible par l'intermédiaire de la carte que lui a déjà délivrée I'habilitant BANQUE. Ainsi prend naissance une carte multi-services.

ll est également possible de chainer les habilitants entre eux pour les rendre dependants les uns des autres comme représenté aux figures 1a et 1b. L'habitant BANQUE ou habilitant maître peut donner accès a un habilitant TELEPHONE qui lui même peut donner accès a un habilitant ANNUAIRE. Dans ces conditions, une personne ne peut obtenir le service délivré par l'habilitantANNUAIRE que si elle possède déjà l'habilitantTELEPHONE, et pouravoirl'habilitant TELEPHONE il faut déjà posséder I'habilitant BANQUE.

Dans cet exemple, l'habilitant TELEPHONE autorise I'utilisation de cabines téléphoniques recevant des cartes pour assurer automatiquement le décomp- te des unites téléphoniques, et l'habilitantANNUAIRE permet de consulter sur un écran des annuaires téléphoniques depuis son domicile.

Sur la figure 1b est illustré un exemple plus gé- néral d'une arborescence possible entre plusieurs habilitants.

L'habilitant H 1 ou habilitant maître permet d'accéder aux habilitants H2 ou H3, et I'habilitant H2 permet d'acceder aux habilitants H4 ou H5. Ainsi, une personne qui desire accéder a I'habilitant H5 doit néces- sairement déjà avoir accès aux habilitants H2 et H1.

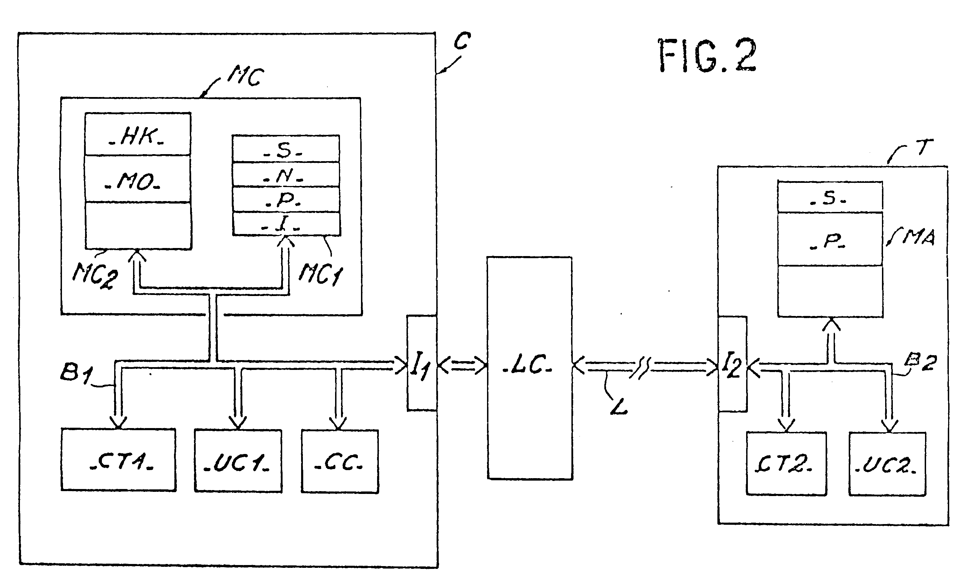

En se reportant a la figure 2, soit un objet portatif tel qu'une carte (C). Cette carte (C) comprend au moins une mémoire (MC), des circuits de traitement (CT1), un circuit de comparaison (CC) et une unité de commande (UC1).

Tous ces elements communiquent entre eux par un bus de liaison (B1).

La mémoire (MC) est divisée en au moins deux zones mémoire (MC1, MC2). Dans la zone mémoire (MC1) sont au moins enregistrés une information secrete (S) inconnue du détenteur de la carte, un nombre (N) propre a la carte et un algorithme de calcul dé- terminé traduit par un programme (P). Cette zone mémoire (MC1) est inaccessible de l'extérieur.

Dans la zone mémoire (MC2) sont au moins enregistrés des mots d'habilitation (HK) associés a des mots d'ouverture (MO) et destines a recevoir des informations d'identification des habilitants et des informations relatives a des données specifiques des services dispenses par ces habilitants.

Un système d'habilitation (T) specifique d'une application déterminée comprend au moins:
- une mémoire (MA) où sont enregistrés la même information secrete (S) précitée et le programme (P) precite,
- des circuits de traitement (CT2) pour exécuter notamment le programme (P),
- et une unite de commande (UC2) poursynchro- niser les echanges d'information entre la carte (C) et le système (T).

Tous ces elements sont relies entre eux par un bus de liaison (B2).

Pour dialoguer avec le système (T), la carte (C) est connectable a un lecteur de carte (LC) par l'inter- médiaire d'une interface (11). Ce lecteur (LC) est connecté par une voie de communication (L) au système (T) par l'intermédiaire d'une interface (12).

A titre d'exemple, le lecteur de carte (LC) se trou- ve au domicile de l'individu détenteur de la carte, la voie de communication (L) est par exemple assurée par une ligne téléphonique, et le système (T) est situé dans une enceinte de I'organisme habilité a délivrer un service determine.

Pourque le detenteur d'une carte (C) ait accès au service dispense par un habilitant, il faut que cette carte (C) contienne un mot d'habilitation (HK) propre a cet habilitant.

Un mot d'habilitation (HK) pour un habilitant mai- tre contient au moins une zone (ZK) qui identifie I'habilitant et des zones complémentaires (ZA, ZB, ZD) dont le rôle sera explicité plus loin.

Dans le cas d'un chainage entre différents habilitants, le mot d'habilitation (HK), pour tout habilitant qui depend d'un habilitant précédemment écrit, contient en plus une zone (ZM) qui contient la même information que la zone (ZK) du mot d'habilitation de I'habilitant précédemment écrit.

Au mot d'habilitation (HK) correspondant a chaque habilitant est associé au moins un mot d'ouver- ture (MO) écrit dans la mémoire de la carte (C). Ce mot d'ouverture (MO) contient des informations, notamment specif iques du service rendu par l'habilitant. Un mot d'ouverture (MO) se constitue d'une zone (ZK) qui identifie I'habilitant et qui correspond donc a la zone (ZK) du mot d'habilitation associé (HK), d'une zone (ZD) de données propres au service rendu par I'habilitant et des zones complémentaires (ZA, ZB) identiques a celles du mot d'habilitation associé (HK).

Soit une personne physique ou morale désireuse de disposerdu service dispense par un habilitant mai- tre, c'est-à-dire par un habilitant qui ne depend pas d'un autre habilitant. En prenant le cas de la figure 1a, cet habilitant maître est I'habilitant BANQUE.

La personne se rend auprès de cet habilitant tel qu'un établissement bancaire habilite notamment a délivrer des cartes de credit. Après des contrôles préalables classiques portant par exemple sur l'identité de la personne et sur la situation de son compte bancaire ou après l'ouverture de ce dernier, I'habilitant BANQUE délivre une carte de credit dans la zone mémoire (MC2) de laquelle ont été écrits un mot d'ha- bilitation (HK1) à I'adresse (a1) et un mot d'ouverture (M01) a I'adresse (a10). Ces operations d'ecriture sont effectuées dans le site de l'etablissement bancaire par l'intermédiaire d'un systeme informatique d'habilitation dûment protégé auquel est connectée la carte (C).

En se reportant a la figure 3, les zones (ZK, ZD, ZA, ZB) sont remplies comme suit:
- la zone (ZK) contient I'information BANQUE,
- la zone (ZD) contient des données dites de sécurité,
- la zone (ZA) peut être simplement constituée par un seul bit binaire qui prend la valeur 1 1 »,
- et la zone (ZB) peut être également constituée par un seul bit binaire qui prend la valeur 1 1 ».

Les zones (ZK, ZD, ZA, ZB) du mot d'ouverture (M01) sont remplies comme suit:
- la zone (ZK) contient I'information BANQUE,
- la zone (ZD) contient un credit d'un montant de 1.000 F par exemple,
- et les zones (ZA, ZB) contiennent les mêmes informations que les zones (ZA, ZB) du mot d'habilitation (HK1) associé.

Dans la zone mémoire (MC1) de la carte (C) sont également enregistrés les paramètres (S, N, P) défi- nis précédemment, ainsi qu'un code (I) connu du détenteur de la carte pour pouvoir faire certifier ensuite par la carte, d'une façon connue, la légitimité du détenteur de cette carte avant d'effectuer toute operation.

La personne munie d'une telle carte (C) peut se trouver ensuite dans trois situations.

La premiere situation ou situation normale correspond au cas ou le détenteur de la carte utilise celle-ci pour effectuer des transactions bancaires ha- bilitées par I'habilitant BANQUE, et a chaque transaction le credit inscrit dans la zone (ZD) du mot d'ouver- ture (M01) est débité du montant de la transaction. Le systeme qui est charge d'ecrire le nouveau credit re- cherche dans la zone mémoire (MC2) de la carte (C) un mot d'ouverture dont la zone (ZK) contient I'habilitant BANQUE et verifie, avant ecriture, que les bits des zones (ZA, ZB) sont bien a la valeur « 1 ».

La deuxième situation se présente lorsque le montant du credit inscrit dans la carte n'est plus suf- fisant pour envisager de nouvelles transactions.

Jusqu'à maintenant le détenteur de la carte n'avait comme autre solution que de se rendre auprès de I'organisme habilitant BANQUE pour se faire recréditer sa carte ou se faire délivrer une nouvelle carte suivant le processus décrit précédemment.

Par contre avec le procédé et le système selon l'invention, le détenteur d'une carte peut la recréditer lui-même sans se rendre auprès de I'habilitant BANQUE en effectuant une operation depuis son domicile selon le schema indiqué a la figure 2. Pour cette opé- ration, il introduit sa carte (C) dans le lecteur (LC) et appelle ensuite par telephone un opérateur du système d'habilitation (T) situé dans les locaux de I'habilitant BANQUE. Une fois la liaison établie et le lecteur (LC) connecté au systeme (T), les operations suivantes se déroulent successivement.

Le détenteur de la carte demande a l'opérateur l'écriture d'un nouveau mot d'ouverture (M010) dans la zone mémoire (MC2) de la carte (C) avec les informations suivantes: I'habilitant est I'habilitant BANQUE (zone ZK) etje desire un credit de 5.000 F (zone ZD). L'opérateur commande le système d'habilitation (T) pour que ce dernier écrive ce mot d'ouverture (M010) aprés avoir recherché une adresse libre (an) dans la zone mémoire (MC2).

La système (T) ou la carte (C) demande ensuite i'execution du programme (P) au niveau du système (T) et au niveau de la carte (C). Ce programme (P) prend en compte quatre paramètres: I'adresse (an), I'information secrete (S), le mot d'habilitation (HK1) de I'habitant BANQUE, mot qui doit normalement être déjà écrit dans la carte, et la donnée (N) propre a la carte et constituée par un numéro de fabrication par exemple, transmis au système (T).

La carte (C), avant d'executer le programme (P), vérifie si elle contient bien le mot d'habilitation (HK) de I'habilitant contenu dans la zone (ZK) du mot d'ou- verture (M010) qui vient d'etre écrit. Dans cet exem- pie, la carte va donc rechercher si elle contient bien le mot d'habilitation (HK1) de I'habilitant BANQUE. Si la carte (C) ne retrouve pas le mot d'habilitation (HK1) le dialogue s'arrete et la carte (C) invalide le mot d'ou- verture (M010) en positionnant a « 0 » le bit de la zone (ZB) du mot d'ouverture (M010). Par contre, si la carte retrouve le mot d'habilitation (HK1), c'est-à-dire qu'elle retrouve I'information BANQUE dans la zone (ZK) d'un mot d'habilitation (HK) et après avoir vérifié également que les bits des zones (ZA, ZB) de ce mot ont bien la valeur « 1 », la carte (C) execute le programme (P) par l'intermédiaire de ses circuits de traitement (CT1).

De son côté, le système (T) execute également le programme (P), le mot d'habilitation (HK1) nécessaire a ce calcul et qui peut être connu de l'opérateur du système (T) est entre sous le contrôle du système (T), mais n'est pas transmis par la carte (C).

Le résultat (R) calculé par le système (T) est ensuite transmis a la carte (C) qui va comparer dans son circuit comparateur (CC) ce résultat (R) avec celui qu'elle a elle-même calculé.

Si les deux résultats satisfont une condition prédéterminée (par exemple égalité des résultats), la carte (C) valide le mot d'ouverture (M010) en positionnant le bit de la zone (ZB) de ce mot a la valeur « 1 ». II est donc important de noter que c'est la carte elle-même qui valide un mot d'ouverture. Ensuite, le système (T) vérifie que le contenu du mot d'ouverture (M010) correspond bien au contenu du mot qu'il a de- mandé d'ecrire et positionne ensuite le bit de la zone (ZA) du mot d'ouverture (M010) a la valeur « 1 ».

Si toutes ces operations se déroulent normalement la carte est effectivement créditée.

La troisième situation concerne le cas ou le détenteur de la carte (C) veut se faire écrire un nouvel habilitant (HK).

Si cet habilitant est un nouvel habilitant maître, le processus a déjà été décrit précédemment. Par contre, si ce nouvel habilitant depend d'un autre habilitant dont le mot d'habilitation a déjà été écrit dans la carte, le détenteur de cette carte peut de lui-même déclencher i'operation d'ecriture de ce nouvel habilitant selon le schema représenté a la figure 2.

Une fois la liaison établie avec le système (T), le détenteur de la carte demande l'écriture d'un mot d'habilitation (HK). Prenons le cas de la figure 1a ou le détenteur de la carte veut accéder à l'habilitant TELEPHONE (HK2). II demande donc du terminal (T) un mot d'habilitation (HK2) avec I'information TELEPHONE dans la zone (ZK) et I'information BANQUE dans la zone (ZM). Une fois ce mot d'habilitation (HK2) écrit par exemple a I'adresse (a2) de la zone mémoire (MC2) de la carte (C), celle-ci va verifier si elle possède déjà un mot d'habilitation (HK1) correspondant a I'habilitant BANQUE. Pour cela, elle re- cherche dans les zones (ZK) des mots d'habilitation déjà écrits, si une de ces zones contient I'information BANQUE. Si elle ne retrouve pas cette information, le dialogue est interrompu. Si elle retrouve cette information, elle vérifie en plus si les bits des zones (ZA, ZB) du mot d'habilitation retrouve sont positionnés a la valeur « 1 ». Dans I'affirmative, la carte (C) et le système (T) exécutent le programme (P) précité avec validation du mot d'habilitation (HK2) aux mêmes conditions que celles imposées pour l'écriture d'un mot d'ouverture (MO) comme décrit dans la situation précédente.

II est à noter que les informations de sécurité pré- citées présentes dans la zone (ZD) de chaque mot d'habilitation (HK) sont inclusivement destinées a compliquer le calcul du résultat (R) et ainsi éviter qu'un fraudeur puisse facilement précalculer a I'avan- ce un tel résultat (R). Ces informations peuvent par exemple contenir la date a laquelle I'habilitant a été écrit dans la carte. Pour augmenter encore la sécurité du système, il est possible de combiner suivant une relation prédéterminée le paramètre d'adresse (a) et le paramètre (N).

Une fois le mot d'habilitation (HK2) validé, le détenteur de la carte se fait écrire un mot d'ouverture (M02) a une adresse (a20) selon le même processus que pour l'ecriture du mot d'ouverture (M012).

Il est a noter également que la zone (ZB) précitée n'est pas accessible de l'extérieur.

Il est bien entendu que I'objet portatif peut être autre chose qu'une carte et que les habilitants a envisager ne dispensent pas exclusivement des services financiers. Les services peuvent concerner des abonnements a des revues, a des films que I'on peut projeter sur l'écran de sa television...

## Revendications

1. A method of authorising the holder of a portable object (C) such as a card of the type comprising a memory (MC) and processing, comparison and control circuits (CT1, CC, UC1) to gain access by this object to at least one service dispensed by at least one authorising unit, the method consisting in connecting the object (C) to an authorisation system (T) of the type comprising a memory (MA) and processing and control circuits (CT2, UC2) appertaining to the said authorising unit, in causing results issued from the implementation of an identical program (P) to be calculated separately by the object and by the system while allowing for at least one secret datum (S) prerecorded in the object and in the system (T); in transmitting the result calculated by the system (T) to the object (C) and, forthe purpose ofvalidating the registration of an authorisation datum in the memory (MC) of the object (C) by the system (T), in com- paring the separately calculated results in the object, characterised in that it consists in defining first the different authorisations whereby the holderof an object may obtain a service; in linking these different authorisations in accordancewith a determined law, in identifying each authorising unit by an authorisation datum having a determined format comprising at least one datum for identification of the authorisation in question, in making allowance in the calculation of the aforesaid result for the authorisation datum of the authorising on which depends the authorising unit of which the authorisation datum is intended to be written, the authorisation datum of a first or master authorisation being written by a unit duly empowered at the time of the delivery of the object to its holder, the authorisation data of the otherauthorisations being written in the object on request from the holder of this object and under the exclusive control of this object, and in that it consists in initially causing the system on request by the holder of the object to write an authorisation datum in the memory (MC) of the object (C) and in then causing the object to enter a validation datum in its memory (MC) if the aforesaid comparison satisfies a predetermined condition.

2. A method according to Claim 1, characterised in that it consists in verifying at the time of writing an authorisation datum in the object that the linking law is already in the object and in then initiating the calculation of the aforesaid results.

3. A method according to one of the preceding claims, characterised in that the authorisation data of the authorisations other than the master authorisation may be written in the object at a distance, in particular at the domicile of the holder of the object.

4. A method according to one of the preceding claims, characterised in that it consists in making allowance in the calculation of the aforesaid re- suit for the memory address at which the authorisation datum is written.

5. A method according to Claim 4, characterised in that it consists in making allowance in the calculation of the aforesaid result for the aforesaid memory address in combination with a datum intrinsic to the object such as the serial number of the card entered at the time of its manufacture.

6. A method according to Claim 1 or 2, characterised in that it consists in causing the writing of an authorisation datum to be validated by the object if the results calculated by the object and by the authorisation system are identical.

7. A method according to one of the preceding claims, characterised in that it consists in asso- ciating with each authorisation datum appertaining to an authorisation at least one unlocking word containing at least the datum for identifying the authorisation and a datum intrinsic to the service provided by this authorisation, in causing a new unlocking word to be written on request from the holder of the object and by means of the specific authorisation system of the authorisation in question, in determining whether the authorisation identified in the unlocking word has its authorisation datum already written in the object, and in then initiating the calculation of the aforesaid results.

8. A system for authorising the holder of a portable object (C), such as a card, to gain access by this object (C) to at least one service dispensed by at least one authorising unit of the type in which the object comprises at least one memory (MC) wherein are recorded at least one secret datum (S), and a program (P) implementing a determined algorithm taking into account at least the secret datum (S), the said object (C) being con- nected to a system (T) for specific authorising of a given authorisation and comprising at least one memory (MA) in which are recorded at least the aforesaid secret datum and the aforesaid program; a comparison circuit in the object for com- paring the results calculated by the object and the system separately executing the aforesaid program (P), characterised in that it comprises means to enter, by the authorising system (T) in the memory of the object, at the request of its holder, authorisation data identifying authorisations and authorising the holder of the object to gain access to the services dispensed by these authorisations, and means to enter, by the object (C) in its own memory, after the entry of an authorisation datum, a validation datum of this authorisation datum if the above-mentioned comparison satisfies a predetermined relationship, the authorisation datum of the authoriser, on which depends that of which one wishes to write the authorising datum, being taken into account in the calculation of the result.

## Claims

1. Procédé pour habiliter le détenteur d'un objet portatif (C) tel qu'une carte du type comprenant une mémoire (MC) et des circuits de traitements, de comparaison et de commande (CT1, CC, UC1), a accéder par cet objet a au moins un service dis- pensé par au moins un organisme habilitant, le procédé consistant a connecter I'objet (C) a un système d'habilitation (T), du type comprenant une mémoire (MA) et des circuits de traitement et de commande (CT2, UC2), propre audit organisme habilitant, a faire calculer séparément par I'objet et par le système des résultats issus de l'exécution d'un même programme (P) prenant en compte au moins une information secrete (S) préenregistrée dans I'objet et dans le système (T),à transmettre a I'objet (C) le résultat calculé par le système (T) et, pour valider I'inscription d'une information d'habilitation dans la mémoire (MC) de I'objet (C) par le système (T), a comparer dans I'objet les résultats calculés séparément, caractérisé
en ce qu'il consiste a définir au préalable les differents habilitants auxquels le détenteur d'un objet peut obtenir le service, a chaîner ces différents habilitants selon une règle déterminée, a identifier chaque organisme habilitant par une information d'habilitation de format determine comprenant au moins une information d'identification de I'habilitant considéré a prendre en compte dans le calcul du résultat précité I'information d'habilitation de I'habilitant dont depend l'habilitant dont on veut écrire I'information d'ha- bilitation, I'information d'habilitation d'un premier habilitant ou habilitant maître étant écrite par un organisme dûment habilité lors de la délivrance de I'objet a son détenteur, les informations d'ha- bilitation des autres habilitants étant écrites dans I'objet a la demande du détenteur de cet objet et sous le seul contrôle de cet objet, et en ce qu il consiste a faire d'abord écrire par le système a la demande du détenteur de I'objet une information d'habilitation dans la mémoire (MC) de I'objet (C) et a faire ensuite inscrire par I'objet une information de validation dans sa mémoire (MC) si la comparaison précitée satisfait une condition prédéterminée.

2. Procédé selon la revendication 1, caractérisé en ce qu'il consiste, a verifier lors de l'écriture dans I'objet d'une information d'habilitation que la règle de chaînage est déjà dans I'objet et a lancer ensuite le calcul des résultats précités.

3. Procédé selon l'une des revendications précé- dentes, caractérisé en ce que les informations d'habilitation des habilitants autres que I'habilitant maître peuvent être écrites a distance dans l'objet, notamment au domicile du détenteur de l'objet.

4. Procédé selon l'une des revendications précé- dentes, caractérisé en ce qu'il consiste a prendre en compte dans le calcul du résultat précité l'adresse mémoire ou est écrite I'information d'habilitation.

5. Procédé selon la revendication 4, caractérisé en ce qu'il consiste a prendre en compte dans le calcul du résultat précité I'adresse mémoire précitée combinée avec une information propre a I'objet telle que le numéro de série de la carte inscrit lors de sa fabrication.

6. Procédé selon la revendication 1 ou 2, caracteri- sé en ce qu'il consiste a faire valider l'écriture d'une information d'habilitation par I'objet s'il y a identité entre les résultats calculés par I'objet et par le système d'habilitation.

7. Procédé selon l'une des revendications précé- dentes, caractérisé en ce qu'il consiste a associer a chaque information d'habilitation propre a un habilitant au moins un mot d'ouverture contenant au moins I'information d'identification de I'habilitant et une donnée propre au service dispense par cet habilitant, a faire écrire un nouveau mot d'ouverture a la demande du détenteur de I'objet et par l'intermédiaire du systéme d'habilitation spécifique de I'habilitant considéré, a rechercher si I'habilitant identifié dans le mot d'ouverture a son information d'habilitation déjà écrite dans l'objet, et a lancer ensuite le calcul des résultats précités.

8. Système pour habiliter le détenteur d'un objet portatif (C), tel qu'une carte, a accéder par cet objet (C) a au moins un service dispense par au moins un organisme habilitant, du type ou I'objet comprend: au moins une mémoire (MC) ou sont au moins enregistrés une information secrete (S) et un programme (P) executant un algorithme dé- terminé prenant en compte au moins l'information secrete (S) ; le dit objet (C) étant connecté a un système d'habilitation spécifique (T) d'un habilitant donné et comprenant : au moins une mémoire (MA) ou sont au moins enregistrés I'information secrete précitée et le programme précité, un circuit de comparaison dans I'objet pour comparer les résultats calculés par I'objet et le système executant séparément le programme (P) précité, caractérisé en ce qu'il comporte des moyens pour faire inscrire, par le système d'ha- bilitation (T), dans la mémoire de l'objet, a la demande de son détenteur, des informations d'ha- bilitation identifiantdes habilitants et autorisant le détenteur de I'objet a accéder aux services dis- pensés par ces habilitants, et des moyens pour faire inscrire par I'objet (C), dans sa propre mémoire, après I'inscription d'une information d'ha- bilitation, une information de validation de cette information d'habilitation si la comparaison précitée satisfait une relation prédéterminée, I'information d'habilitation de I'habilitant dont depend celui dont on veut écrire I'information d'habilita- tion étant prise en compte dans le calcul du résultat.

## Patentansprüche

1. Verfahren zur Berechtigung des Inhabers eines tragbaren Objektes (C), wie z.B. einer Karte von jenem Typ, der einen Speicher (MC) und Verarbeitungs-, Vergleichs- und Befehlsschaltkreise (CT1, CC, UC1) aufweist, zu berechtigen, mit diesem Objekt auf zumindest eine Dienstleistung zumindest einer berechtigten Stelle zuzugreifen, wobei das Verfahren darin besteht, das Objekt mit einem System zur Berechtigung (T) zu verbinden, das von einem Typ ist, der einen Speicher (MA) und Verarbeitungsschaltkreise und Befehlsschaltkreise (CT2, UC2) aufweist und der genannten berechtigten Stelle eigen ist, durch das Objekt und das System getrennt voneinander Resultate errechnen zu lassen, die der Ausführung eines gleichen Programmes (P) entstammen, das wenigstens eine im Objekt und im System (T) voreingespeicherte geheime Information (S) berücksichtig, das vom System (T) errechnete Resultat dem Objekt (C) zuzusenden, und zur Gültigerklärung der Einspeicherung einer Berechtigungsinformation im Speicher (MC) des Objektes (C) durch das System (T) im Objekt die getrennt berechneten Resultate zu vergleichen, dadurch gekennzeichnet, daß es darin besteht, vorher die verschiedenen Berechtigten zu definieren, von denen der Inhaber eines Objektes eine Dienstleistung erhalten kann, diese verschiedenen Berechtigten nach einer vorbestimmten Regel miteinander zu verketten, jede berechtigte Stelle durch eine Berechtigungsinformation eines bestimmten Formates zu identifizieren, wobei sie zumindest eine Identifikationsinformation für den in Betracht gezogenen Berechtigten enthält, bei der vorgenannten Berechnung des Resultates die Berechtigungsinformation des Berechtigten zu berücksichtigen, von dem der Berechtige abhängt und von dem man die Berechtigungsinformation eingeschrieben haben will, durch das System auf Anforderung des Inhabers des Objektes eine Berechtigungsinformation in den Speicher (MC) des Objektes (C) einschreiben zu lassen, und danach vom Objekt eine Gültigkeitsinformation in seinen Speicher (MC) schreiben zu lassen, wenn der vorgenannte Vergleich einer vorbestimmten Bedingung entspricht.

2. Verfahren nach Anspruch 1, dadurch gekennzeichnet, daß beim Einschreiben der Berechtigungsinformation in das Objekt zu überprüfen, daß die Verkettungsregel sich bereits im Objekt befindet, und daraufhin die vorgenannten Resultate berechnen zu lassen.

3. Verfahren nach einem der vorhergehenden Ansprüche, dadurch gekennzeichnet, daß die Berechtigungsinformationen der vom Hauptberechtigten verschiedenen Berechtigten aus der Entfernung in das Objekt eingeschrieben werden können, insbesondere am Wohnsitz des Karteninhabers.

4. Verfahren nach einem der vorhergehenden Ansprüche, dadurch gekennzeichnet, daß es darin besteht, bei der Berechnung des vorgenannten Resultates die Speicheradresse zu berücksichtigen, wo die Berechtigungsinformation eingeschrieben ist.

5. Verfahren nach Anspruch 4, dadurch gekennzeichnet, daß es darin besteht, bei der vorgenannten Berechnung des Resultates die vorgenannte Speicheradresse in Kombination mit einer dem Objekt eigenen Information, wie z.B. der Seriennummer der Karte, die bei ihrer Herstellung eingeschrieben wird, zu berücksichtigen.

6. Verfahren nach Anspruch 1 oder 2, dadurch gekennzeichnet, daß es darin besteht, das Einschreiben einer Berechtigungsinformation durch das Objekt zuzulassen, wenn Identität zwischen den Resultaten vorliegt, die vom Objekt und vom Berechtigungssystem berechnet werden.

7. Verfahren nach einem der vorhergehenden Ansprüche, dadurch gekennzeichnet, daß es darin besteht, jeder Berechtigungsinformation, die einem Berechtigten eigen ist, zumindest ein Eröffnungswort zuzuordnen, das zumindest die Identifikationsinformation des Berechtigten und eine Information enthält, die der von dem Berechtigten gelieferten Dienstleistung eigen ist, ein neues Eröffnungswort auf Verlangen des Inhabers des Objektes mittels des spezifischen Berechtigungssystems des jeweiligen Berechtigten einzuschreiben, nachzuforschen, ob der im Eröffnungswort identifizierte Berechtigte seine Berechtigungsinformation bereits in das Objekt eingeschrieben hat, und darin, daraufhin die vorgenannte Berechnung des Resultates (R) durchzuführen.

8. System zur Berechtigung des Inhabers eines tragbaren Objektes (C), wie z.B. einer Karte, um mittels dieses Objektes (C) Zugriff zu wenigstens einer Dienstleistung zu haben, die von wenigstens einer berechtigten Stelle geleistet wird, von jenem Typ, wo das Objekt zumindest einen Speicher (MC) hat, in dem wenigstens eine geheime Information (S) und ein Programm (P) gespeichert sind, das einen bestimmten Algorithmus durchführt, der wenigstens der geheimen Information (S) Rechnung trägt; wobei das Objekt (C) mit einem speziellen Berechtigungssystem (T) eines Berechtigten verbunden ist und wenigstens einen Speicher (MA) umfaßt, in dem wenigstens die vorerwähnte Geheiminformation und das erwähnte Programm gespeichert sind, sowie ein Vergleichskreis im Objekt zum Vergleich der vom Objekt berechneten Resultate gegeben ist und das System getrennt das vorher erwähnte Programm (P) ausführt, dadurch gekennzeichnet, daß es Einrichtungen zum Einschreiben durch das Berechtigungssystem (T) in den Speicher des Objektes aufgrund des Verlangens des Halters aufweist, wobei Berechtigungsinformationen, die den Berechtigten identifizieren und den Halter des Objektes berechtigen, auf die von diesen Berechtigten gelieferten Dienstleistungen zuzugreifen, und Einrichtungen hat, um durch das Objekt (C) in seinem eigenen Speicher nach Einschreibung einer Berechtigungsinformation eine Gültigkeitsinformation dieser Berechtigungsinformation einzuschreiben, wenn der vorerwähnte Vergleich eine vorbestimmte Beziehung befriedigt, wobei die Berechtigungsinformation des Berechtigten von jener abhängt, von der man die Berechtigungsinformation einschreiben will und in der Berechnung des Resultates berücksichtigt.
